Europäisches Patentamt

European Patent Office

Office européen des brevets

(11) Publication number: **0 263 698**
**A1**

## (12) EUROPEAN PATENT APPLICATION

(21) Application number: 87308896.7

(22) Date of filing: 07.10.87

(51) Int. Cl.⁴: **B 32 B 5/30**
**B 32 B 27/20, B 32 B 27/32**

(30) Priority: **10.10.86 GB 8624369**

(43) Date of publication of application:
**13.04.88 Bulletin 88/15**

(84) Designated Contracting States:
**AT BE CH DE ES FR GB GR IT LI LU NL SE**

(71) Applicant: **BCL LIMITED**
**Bath Road**
**Bridgwater Somerset TA6 4PA (GB)**

(72) Inventor: **King, Gary Dennis**
**3 Ashbourne Crescent**
**Taunton Somerset TA1 2RA (GB)**

**Staton, Mark John**
**1 The Forge**
**Great Somerford Wiltshire (GB)**

(74) Representative: **Hardisty, David Robert et al**
**BOULT, WADE & TENNANT 27 Furnival Street**
**London EC4A IPQ (GB)**

(54) Heat-sealable polypropylene film.

(57) The invention is concerned with a heat-sealable polypropylene film which has improved absorption properties for ultra-violet light and which, when viewed, is opaque white on one surface and pearlescent on the other surface. The film comprises a base polypropylene film which incorporates 1% to 30% by weight of a particulate material (size 0.2 to 25 microns), such as calcium carbonate, and which has been stretched to form voids substantially at the location of each particle. A layer of a transparent heat-sealable polymeric composition is applied to each side of the base film and in one layer there is dispersed 2.5% to 35% by weight of finely divided titanium dioxide. The sealing properties of the layer containing the titanium dioxide are substantially unchanged by the addition.

EP 0 263 698 A1

Bundesdruckerei Berlin

**Description**

# HEAT-SEALABLE POLYPROPYLENE FILM

This invention is concerned with a heat-sealable polypropylene film which when viewed is opaque white on one surface and is lustrously pearlescent on the other surface as well as having improved absorption properties for ultra violet light and improved anti-blocking (that is anti-sticking) properties when compared with conventional heat-sealable pearlised polypropylene.

The manufacture of pearlised poproplyene film is well known. In one method a finely divided inert material having a particle size of about 5 microns, which may be a mineral such as clay or chalk or a polymeric material such as a polyamide (as described in United Kingdom Specification No. 1161585) is dispersed within a polypropylene melt prior to being extruded to form a sheet. The sheet is then oriented (preferably biaxially) under stretch orientatable conditions, that is, at a temperature between about 2°C below the second order transition temperature and the first order transition temperature when micro voids are formed in the film substantially at the location of each particle of inert material. The voids cause the oriented film to adopt a silvery, pearlescent, translucent appearance and to undergo a reduction in density. It is also known to form a layer of a transparent heat-sealable composition to one or preferably both sides of the base pearlised film so that the film can readily be used upon wrapping and packaging machinery. For this purpose, a heat-sealable composition known for use with plain oriented polypropylene film may be used, such as is described, for example, in European Patent Publication No. 0004633 B1.

Whereas, such pearlised film has found ready acceptance in many wrapping and packaging applications because of its unique appearance, in other applications an improvement in ultra violet light barrier properties is required without detracting from the other physical properties of the pearlised film and from its aesthetic attraction.

These requirements have been achieved by the wrapping film of the present invention.

According to the present invention, a heat-sealable wrapping film comprises a base polypropylene film containing in dispersion from 1% to 30% by weight of a solid particulate material having a particle size in the range of 0.2 to 25 microns which had been oriented under stretch orientatable conditions so as to form voids in the film, the base film having on one surface a first layer of a transparent heat-sealable polymeric composition and on the other surface a second layer of a heat-sealable polymeric composition containing in dispersion from 2.5% to 35% by weight of finely divided titanium dioxide, the second layer having a thickness of from 2% to 20% of the total thickness of the wrapping film.

The resulting film is pearlescent in appearance when viewing the surface bearing the transparent heat-sealable layer and is distinctly opaque white when viewing the second surface bearing the heat-sealable layer containing the titanium dioxide. The film has significantly improved ultra violet light absorbence thus, offering greater protection to goods, particularly food-stuffs which are susceptible to spoilage by ultra violet light. Surprisingly, the heat-seal threshold temperature of the second heat-sealable layer is not affected to any significant extent by the addition of the titanium dioxide. This is most important since an increase in the heat-seal threshold temperature requires an increase in heat-seal temperature, and perhaps dwell time, to obtain properly secured heat seals. Further, an increase in the heat-seal threshold temperature increases the risk of shrinking and puckering of the oriented polypropylene film in the region of the heat-seal.

By "heat-seal threshold temperature" is meant the lowest heat-sealing temperature that will give a heat-seal of strength 200 grams per 25 millimetres width of film when two strips of film 25 millimetres in width are heat-sealed together between plain heat-sealing jaws under a pressure of 0.1 mega pascal for a dwell time of 1 second. The heat-seal strength is determined by measuring the force required to peel the sealed strips apart.

The presence of the titanium dioxide in the second heat-sealable layer has been found not to affect too adversely the adhesion of cold seal adhesives of vinylidene chloride copolymer coatings to the layer (as is required in certain applications) or the strength of seals made with such adhesives or coatings when compared with similar seals made with such adhesives or coatings applied to heat-sealable layers not having the titanium dioxide addition. The presence of the titanium dioxide, however, enhances the blocking properties of the second layer and further renders it more readily printable by the conventional printing inks, due to the uneven surface caused by the titanium dioxide particles.

The end user of the film, in accordance with the invention, has a choice of surfaces to expose as the outerlayer when packaging goods in the film -namely the surface exhibiting the pearlescent lustre effect or the surface exhibiting the white opaque effect, depending upon which is aesthetically pleasing in the circumstances. A particular advantage of the film of the present invention is that the end user has the choice of a pearlised or white opaque surface without it being necessary to coat or print one side of a standard pearlised film with a white pigment in a separate converting operation.

The intensity of the whiteness of the second heat-seal layer depends upon the thickness of the layer and the amount of titanium dioxide incorporated within the layer. The thickness of the second layer is preferably from 4% to 15% of the total thickness of the wrapping film. The titanium dioxide content of the second layer should preferably not exceed about 30% by weight of the second layer since the greater the concentration the greater the wear upon the extruder. On the other hand this concentration should be such that the desired white effect and ultra violet light absorption are obtained. Preferably the titanium dioxide content in the second layer is from 10% to 30% by weight particularly since at this level waste film such as edge trim may be fed back to, and incorporated within, the base polypropylene feedstock without any significant deleterious effects.

The base polypropylene film may consist solely of the homopolymer of propylene or may contain minor amounts of other compatible polymeric materials which do not affect to any significant degree the properties of the hompolymer.

The solid particulate material dispersed within the base polypropylene film may be any of the conventional particulate materials used in the manufacture of pearlised polypropylene film. These include the minerals, calcium carbonate, silica, clay and certain synthetic plastic materials. The preferred particle size is from 1 to 10 microns and the preferred content of the particulate material within the base film is from 3% to 20%.

The heat-sealable polymeric composition forming the heat-seal layers upon the base film may be any of the conventional heat-sealable compositions used in the manufacture of transparent and pearlised heat-sealable polypropylene films. Examples are propylene/ethylene copolymers containing a minor amount of ethylene, propylene/butene-1 copolymers, and ethylene/propylene/butene-1 terpolymers.

In a convenient method of manufacture of the wrapping film the base polypropylene film and the first and second heat-sealable layers are coextruded through a single flat or annular die slot. Alternatively, the first and second heat-sealable layers may be melt extruded upon or laminated to preformed base polypropylene film which has been oriented by stretching before or after the application of the layers.

The invention also includes a method of manufacture of a heat-sealable wrapping film comprising applying to one surface of a base polypropylene film a first layer of a transparent heat-sealable polymeric composition and to the other surface a second layer of a heat-sealable polymeric composition containing a dispersion from 2.5% to 35% by weight of finely divided titanium dioxide, the second layer having a thickness of from 2% to 20% of the total thickness of the wrapping film and the base polypropylene film containing a dispersion from 1% to 30% by weight of a solid particulate material having a particle size in the range from 0.2 to 25 micron which is stretched under stretch-orientatable conditions before or after the application of the heat-sealable layers.

By "stretch-orientatable conditions" is meant stretching the base polypropylene film at a temperature in the range from the first transition temperature to 2°C below the second order transition temperature.

The titanium dioxide may be introduced into the second layer of the heat-sealable polymeric composition either directly by blending or by way of a masterbatch blended into the composition.

The invention will now be more specifically described by way of the following Examples.

## EXAMPLES 1 to 6

By way of control, a conventional heat-sealable pearlised polypropylene film was made as follows:-

Finely divided calcium carbonate having an average particle size of 4 microns was blended into a homopolymer of propylene in an amount of 10% by weight. A melt of the blend was extruded through a coextrusion slot die together with outerlayers of a melt of a heat-sealable composition consisting of a propylene/ethylene copolymer in which the ethylene content was 4% by weight. The multi-layer melt was quenched upon a chill roll and was then oriented by stretching longitudinally 4.5:1 at a temperature of 110°C followed by stretching transversely 10.0:1 at a temperature of about 163°C. The final product was 40 microns in thickness in which each heat-sealable outerlayer had a thickness which was 6% of the total. The product was pearlescent in appearance on both surfaces due to voids formed in the film during stretching and had a density of 0.54 grams/cubic centimetre compared with 0.91 grams/cubic centimetre, the density of polypropylene. The procedure was repeated except that 2.5% by weight of finely divided titanium dioxide was incorporated in one of the heat-sealable layers. The product was still pearlescent when viewed on the side where the heat-sealable layer had no addition but was white on the side carrying the layer with the titanium dioxide addition. The procedure was repeated with a titanium dioxide content of 7.5% and 15% by weight upon the heat-sealable layer. The procedure was then repeated with titanium dioxide content levels at 2.5%, 7.5% and 15% by weight with the change that the thickness of the heat-sealable layer containing the titanium dioxide was increased to 12% of the total thickness of the product. In all cases the product was pearlescent on one side and white on the other, the whiteness becoming more dense with the increase in concentration of the titanium dioxide in the heat-sealable layer.

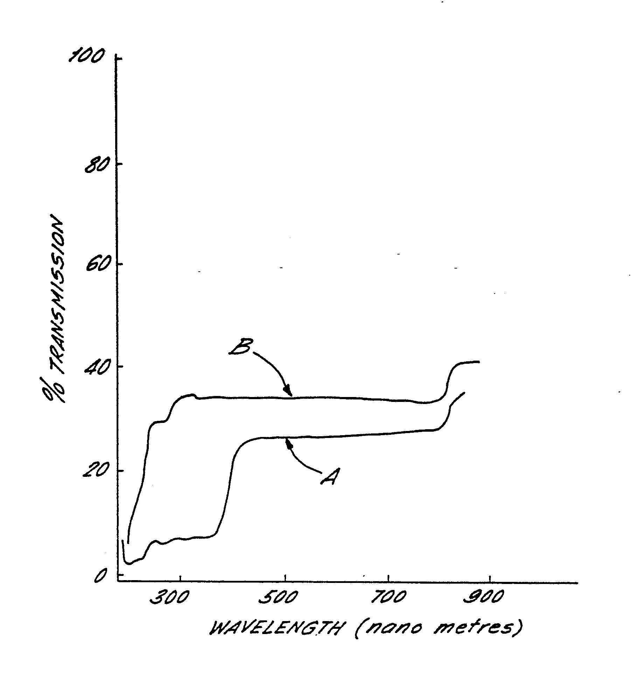

The ultra violet light absorption characteristics of a sample of the product having 12% by weight of titanium dioxide in an outerlayer which was 12% of the total thickness of the product, was measured by means of a Perkins Elmer Lambda V Ultra Violet/Visible Light Spectrometer. The result is shown in the accompanying Figure by the spectrum marked 'A'. The measurement was repeated using a sample of the control, that is, the pearlised film having no titanium dioxide content. The result is shown in the Figure by the spectrum marked 'B'. It is clearly seen that the sample in accordance with the invention absorbs 25-30% more ultra violet light than the control.

A series of tests were then carried out upon the six samples containing titanium dioxide to compare certain physical properties with the pearlised control sample. The results are set out in the accompanying Table. Four of the series of tests were concerned with the effect upon the heat-seal threshold temperature when sealing white to white surfaces, white to pearlised surfaces with or without pre-treatment with a conventional corona discharge. The results showed little change from the control and in most cases were an improvement upon the control.

In the next two series of tests the heat-seal strength of samples 25 millimetres in width and pre-treated with a corona discharge, were measured. These had been heat-sealed between plain heat seal jaws at a temperature of 150°C under a pressure of 0.1mμ pascal for 1 second. In one series the heat-seals were made white surface to white surface and in the other, white surface to pearlised surface. The results generally showed insignificant adverse deviation from the control.

In a further series of tests, the samples were coated on the white side with a natural rubber composition (50% solids) marketed by Croda Chemicals Limited of Goole, England, as "Croda 22-26300" and used as a cold seal adhesive. The coating on drying at 100°C had a weight of 3 grams/square metre. Strips of the coated film, 25 millimetres in width, were sealed between crimp sealing jaws at 25°C with a pressure of 0.41 mega pascal for 2 seconds. The seal strength was measured by measuring the force required in grams to peel the strip apart at the seals. The results showed that despite the widely ranging results the cold seal strengths were shown to be not too adversely affected by the titanium dioxide additions.

It is to be understood that, whereas the thickness of the wrapping film in the foregoing examples is 40 μm, the present invention may be applied to films having a wide range of thicknesses. Preferably the wrapping film of the present invention has a thickness of from 10 to 70 μm, especially of from 15 to 50 μm and more preferably of from 20 to 45 μm.

Subject to the feature of this invention that the second layer has a thickness of from 2% to 20% of the total thickness of the wrapping film, the thickness of the first layer of transparent heat-sealable polymeric composition may conveniently be from 0.3 to 4μm, preferably from 0.5 to 2.5 μm, while the thickness of the second layer may conveniently be from 1 to 8 μm, more preferably from 3 to 6 μm.

| Exp. No. | Thickness Heat-Seal Layer % Total | % by weight Tit.Dioxide in H/Seal layer | H/Seal Threshold Temp.°C W to W(T) | H/Seal Threshold Temp.°C W to W(U) | H/Seal Threshold Temp.°C W to P(T) | H/Seal Threshold Temp.°C W to P(U) | H/Seal Strength at 150°C g/25 mm. W to W(T) | H/Seal Strength at 150°C g/25 mm. W to P(T) | Cold Seal Strength g/25 mm. |
|---|---|---|---|---|---|---|---|---|---|
| C | 6 | 0 | 130 | 128 | 129 | 129 | 295 | 280 | 200 – 320 |
| 1 | 6 | 2.5 | 130 | 128 | 128 | 128 | 300 | 290 | 125 – 170 |
| 2 | 6 | 7.5 | 135 | 130 | 132 | 125 | 275 | 245 | 175 – 285 |
| 3 | 6 | 15.0 | 129 | 127 | 128 | 123 | 265 | 315 | 150 – 210 |
| 4 | 12 | 2.5 | 129 | 125 | 128 | 129 | 310 | 345 | 175 – 240 |
| 5 | 12 | 7.5 | 128 | 127 | 129 | 128 | 350 | 315 | 145 – 225 |
| 6 | 12 | 15.0 | 125 | 129 | 125 | 129 | 345 | 360 | 100 – 230 |

<u>TABLE</u>

C – Control
W – White face (TiO$_2$ H/S layer)
P – Pearlised face (Plain H/S layer)

T – treated with Corona Discharge
U – not treated

0 263 698

## Claims

1. A heat-sealable wrapping film comprising a base polypropylene film containing in dispersion from 1% to 30% by weight of a solid particulate material having a particle size in the range of 0.2 to 25 microns which had been oriented under stretch-orientatable conditions so as to form voids in the film, the base film having one one surface a first layer of a transparent heat-sealable polymeric composition and on the other surface a second layer of a heat-sealable polymeric composition containing in dispersion from 2.5% to 35% by weight of finely divided titanium dioxide, the second layer having a thickness of from 2% to 20% of the total thickness of the wrapping film.

2. A film as claimed in claim 1 in which the weight of titanium dioxide in the heat-sealable polymeric composition is from 10% to 30% by weight.

3. A film as claimed in claim 1 or claim 2 in which the thickness of the second layer is from 4% to 15% of the total thickness of the wrapping film.

4. A film as claimed in claim 1, claim 2 or claim 3 in which the solid particulate material has a particle size in the range 1 to 10 microns.

5. A film as claimed in any one of the preceding claims in which the content of the particulate material within the base film is from 3% to 20%.

6. A film as claimed in any one of the preceding claims in which the particulate material is calcium carbonate, silicon, clay or a synthetic plastic material.

7. A film as claimed in any one of the preceding claims in which the heat-sealable polymeric composition is a propylene/ethylene copolymer containing a minor amount of ethylene.

8. A film as claimed in any one of the claims 1 to 6 in which the heat-sealable polymeric composition is a propylene/butene-1 copolymer, or an ethylene/propylene butene-1 terpolymer.

9. A method of manufacture of a heat-sealable wrapping film comprising applying to one surface of a base polypropylene film a first layer of a transparent heat-sealable polymeric composition and to the other surface a second layer of a heat-sealable polymeric composition containing a dispersion from 2.5% to 35% by weight of finely divided titanium dioxide, the second layer having a thickness of from 2% to 20 % of the total thickness of the wrapping film and the base polypropylene film containing a dispersion from 1% to 30% by weight of a solid particulate material having a particle size in the range from 0.2 to 25 microns which is stretched under stretch-orientatable conditions before or after the application of the heat-sealable layers.

10. A method as claimed in claim 9 in which the first layer and second layers of the heat-sealable composition are coextruded with the base polypropylene film.

0263698

% TRANSMISSION vs WAVELENGTH (nano metres)

European Patent Office

**EUROPEAN SEARCH REPORT**

Application number

EP 87308896.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | <u>EP - A2 - 0 143 567</u> (BCL LIMITED)<br>* Claims; examples 2,3 *<br>-- | 1-10 | B 32 B 5/30<br>B 32 B 27/20<br>B 32 B 27/32 |
| X | <u>GB - A - 2 086 342</u> (COMPAGNIE FRANCAISE DE RAFFINAGE)<br>* Totality *<br>---- | 1-3,5, 9,10 | |

TECHNICAL FIELDS SEARCHED (Int. Cl.4)

B 32 B
B 65 D 65/00
B 65 D 81/00
C 09 J

The present search report has been drawn up for all claims

| Place of search | Date of completion of the search | Examiner |
|---|---|---|
| VIENNA | 12-01-1988 | WEIGERSTORFER |